# EUROPÄISCHE PATENTSCHRIFT

(11) **EP 3 441 563 B1**
(45) Veröffentlichungstag und Bekanntmachung des Hinweises auf die Patenterteilung: **22.04.2020**
(21) Anmeldenummer: 18187801.8
(22) Anmeldetag: 07.08.2018
(51) Int. Cl.: F01D 5/06

(54) **ROTOR FÜR EINE TURBOMASCHINE**
ROTOR FOR A TURBO ENGINE
ROTOR POUR UNE TURBOMACHINE

(30) Priorität: 11.08.2017 DE 102017214058
(43) Veröffentlichungstag der Anmeldung: 13.02.2019
(73) Patentinhaber: MTU Aero Engines AG, 80995 München (DE)
(72) Erfinder: Siebel, Matthias, 81245 München (DE)

(56) Entgegenhaltungen:
- EP-A1- 3 246 517
- GB-A- 2 057 617
- JP-A- S5 870 096
- US-A- 4 844 694
- US-A1- 2004 007 830
- US-A1- 2011 206 519

## Beschreibung

Die vorliegende Erfindung betrifft einen Rotor für eine Turbomaschine, mit wenigstens zwei beschaufelten, lösbar miteinander verbundenen Rotorstufen.

Aus dem Stand der Technik bekannte Rotoren für Turbomaschinen weisen Rotoren mit mehreren Rotorstufen auf, wobei die Rotorstufen auf unterschiedliche Art und Weise miteinander verbunden sein können. Oft werden Flanschverbindungen eingesetzt, wobei eine mit einer Welle verbundene Rotorstufe mit weiteren Rotorstufen mittels Flanschen verbunden werden. Diese Verbindungen der Rotorstufen sind einsatzbedingt oft hohen Belastungen ausgesetzt. Sowohl das Spannungsniveau als auch die Spannungsamplituden können lebensdauerbestimmend für die jeweiligen Bauteile sein.

Ein Beispiel für einen Rotor, bei dem zwischen zwei benachbarten Rotorscheiben ein Zapfelement mit länglichen Öffnungen angeordnet ist, ist aus der US4844694A1 bekannt. Die am 22.11.2017 veröffentliche EP3246517 A1 zeigt einen Rotor mit einer Befestigungsöffnung, die einen Kreisabschnitt und zwei Schlitzabschnitte aufweist.

Eine Aufgabe der vorliegenden Erfindung ist es, einen weiteren Rotor vorzuschlagen, der die genannten Probleme zumindest verringert.

Die erfindungsgemäße Aufgabe wird durch einen Rotor mit den Merkmalen des Anspruchs 1 gelöst.

Vorteilhafte Weiterentwicklungen der vorliegenden Erfindung sind jeweils Gegenstand von Unteransprüchen und Ausführungsformen.

Erfindungsgemäße beispielhafte Ausführungsformen können eines oder mehrere der im Folgenden genannten Merkmale aufweisen.

In einigen erfindungsgemäßen Ausführungsformen weist die Durchgangsbohrung einen elliptischen Querschnitt auf, wobei die Hauptachse des elliptischen Querschnitts in Umfangsrichtung der Rotorscheibe größer gegenüber der Nebenachse in Radialrichtung der Rotorscheibe ist. Spannungstechnisch ist die Ellipsenform besonders vorteilhaft.

In anderen erfindungsgemäßen Ausführungsformen hat die Durchgangsbohrung die Form eines Langlochs, insbesondere mit einer Querschnittsform, die durch zwei parallele lineare oder gekrümmte Grenzlinien in Umfangsrichtung sowie durch zwei halbkreisförmige Grenzlinien, welche die parallelen Grenzlinien jeweils verbinden, gebildet wird.

"In Umfangsrichtung" kann sich im Zusammenhang mit einer linearen Stecke insbesondere auf die Richtung an der Umfangsposition des Zentrums Durchgangsbohrung beziehen.

In wieder anderen erfindungsgemäßen Ausführungsformen hat die Durchgangsbohrung eine wieder andere Form, deren insbesondere maximale Abmessung bzw. Erstreckung in Umfangsrichtung ebenfalls größer ist als in Radialrichtung.

In einigen erfindungsgemäßen Ausführungsformen umfasst eine Rotorstufe eine Schaufel mit einem Schaufelfuß, einen Rotorgrundkörper, eine Rotorscheibe und, optional, einen Rotorarm und einen Flansch. Der Rotorarm kann wenigstens eine Dichtspitze zum Abdichten gegen Leckageströmungen aufweisen. Die Rotorstufe kann integral hergestellt werden, das heißt in einstückiger Bauweise, beispielsweise als Gußteil oder mittels eines generativen Fertigungsverfahrens. Alternativ kann die Schaufel bzw. die über dem Umfang des Rotorgrundkörpers angeordneten Schaufeln separat hergestellt sein, die anschließend miteinander montiert werden.

In einigen erfindungsgemäßen Ausführungsformen sind benachbarte Rotorstufen in Durchströmungsrichtung der Turbomaschine nacheinander angeordnete Rotorstufen. Ein Rotor kann beispielsweise 3, 5, 7, 9 oder mehr Rotorstufen umfassen. Eine oder mehrere der Rotorstufen eines Rotors können mit einer Welle der Turbomaschine verbunden sein. Beispielsweise kann die zweite und die letzte oder vorletzte Rotorstufe mit der Welle der Turbomaschine verbunden sein.

In einigen erfindungsgemäßen Ausführungsformen ist die Durchgangsbohrung am radial äußeren Endbereich der Rotorscheibe am oder vor dem Übergang zum Rotorgrundkörper angeordnet. Über dem Umfang der Rotorscheibe können mehrere Durchgangsbohrungen angeordnet sein, um eine möglichst sichere und stabile Verbindung der Rotorstufen zu erreichen. Insbesondere bei einer als axiale Gasturbine, beispielsweise als Flugtriebwerk ausgeführte Turbomaschine, können zehn, zwanzig, vierzig, sechzig oder mehr Durchgangsbohrungen über dem Umfang angeordnet sein. Die Anordnung kann über dem Umfang symmetrisch oder unsymmetrisch sein. Zum Verbinden der Rotorstufen können alle oder nur ein Teil der Durchgangsbohrungen mit Sicherungselementen versehen bzw. bestückt und montiert werden. Wenn beispielsweise eine Festigkeitsanalyse, die experimentell oder mittels Simulation durchgeführt werden kann, als Ergebnis zeigt, dass nur ein Teil der Durchgangsbohrungen notwendigerweise montiert werden sollte, kann aus Gründen der Gewichtsreduzierung (dies kann einen geringeren Treibstoffverbrauch zur Folge haben und damit wirtschaftlicher sein) nur ein Teil Durchgangsbohrungen mit Sicherungselementen montiert werden. Gegebenenfalls kann aus Sicherheitsgründen die technisch notwendige Anzahl erhöht werden.

In einigen erfindungsgemäßen Ausführungsformen ist der Flansch der ersten Rotorstufe, in Bezug auf die Durchströmungsrichtung der Turbomaschine, am axial stromab angeordneten Ende eines Rotorarms der ersten Rotorstufe angeordnet. In dieser Anordnung kann die erste und zweite Rotorstufe mit dem Rotorarm und dem Flansch eine sogenannte Rotortrommel ausbilden. Der Rotorarm kann eine nach radial außen gerichtete Durchgangsöffnung zum Abfließen bzw. Abschleudern von Fluid aus der Rotortrommel aufweisen.

In einigen erfindungsgemäßen Ausführungsformen ist ein Flansch einer dritten Rotorstufe am, in Bezug auf die Durchströmungsrichtung der Turbomaschine, axial stromauf angeordneten Ende eines Rotorarms der dritten Rotorstufe angeordnet ist. Somit kann ein Flansch, der am stromab angeordneten Ende des Rotorarms der ersten Rotorstufe angeordnet ist und ein Flansch, der am stromauf angeordneten Ende des Rotorarms der dritten Rotorstufe angeordnet ist, in einer vorteilhaft kompakten Bauweise miteinander an der Rotorscheibe der zweiten Rotorstufe montiert und verbunden werden. Zur Montage kann ein Sicherungselement alle drei Bauteile, also die Flansche der ersten und dritten Rotorstufe zusammen mit der Rotorscheibe der zweiten Rotorstufe miteinander verbinden und fixieren.

In einigen erfindungsgemäßen Ausführungsformen ist die erste Rotorstufe eine stromauf erste Rotorstufe des Rotors. In dieser Ausführungsform kann eine erfindungsgemäße Form, nämlich mit einer größeren Erstreckung in Umfangsrichtung als in Radialrichtung, insbesondere eine elliptische Form, der Durchgangsbohrung der Rotorscheibe der zweiten Rotorstufe, die mit der ersten Rotorstufe mittels des Sicherungselements verbunden ist, vorteilhaft auftretende hohe Spannungsniveaus und Spannungsamplituden im Bereich der Durchgangsbohrung reduzieren und somit beispielsweise zu einer erhöhten Lebensdauer beitragen. Die zweite Rotorstufe ist in dieser Ausführungsform oft mit der Welle der Turbomaschine verbunden und oft hohen Belastungen ausgesetzt. Neben den hohen mechanischen Belastungen in Form von hohe Spannungsniveaus und Spannungsamplituden kann auch eine hohe Betriebstemperatur im Bereich der Durchgangsbohrung der Rotorscheibe der zweiten Rotorstufe auftreten. Die erfindungsgemäße Form der Durchgangsbohrung der Rotorscheibe der zweiten Rotorstufe kann auch in diesem Fall zu einer geringeren Schädigung der Rotorscheibe und/oder einer höheren Lebensdauer des Bauteil beitragen.

In einigen erfindungsgemäßen Ausführungsformen ist das Verbindungselement der zweiten Rotorstufe mit dem Flansch der dritten Rotorstufe verbunden. Das Verbindungselement kann die Rotorscheibe der zweiten Rotorstufe und den Flansch der dritten Rotorstufe miteinander verbinden. Optional kann zusätzlich der Flansch der ersten Rotorstufe mit der Rotorscheibe der zweiten Rotorstufe und dem Flansch der dritten Rotorstufe verbunden werden.

Die Querschnittsabmessung der Durchgangsbohrung (11) ist in Umfangsrichtung (u) der Rotorscheibe (25) maximal 20%, insbesondere maximal 15%, weiter insbesondere maximal 10%, weiter insbesondere maximal 5% größer als die Querschnittsabmessung der Durchgangsbohrung (11) in Radialrichtung (r) der Rotorscheibe (25).

In einigen erfindungsgemäßen Ausführungsformen ist die Hauptachse des elliptischen Querschnitts, die in Umfangsrichtung der Rotorscheibe ausgerichtet ist, maximal 20% größer gegenüber der Nebenachse des elliptischen Querschnitts, die in Radialrichtung der Rotorscheibe ausgerichtet ist. Rein exemplarisch kann die Länge bzw. Ausdehnung der Nebenachse des elliptischen Querschnitts der Durchgangsbohrung beispielsweise 9 mm betragen, sodass die Länge bzw. Ausdehnung der Hauptachse maximal 10,8 mm beträgt. Je nach der Größe des Sicherungselements, beispielsweise eines Schaftdurchmessers eines Bolzens oder einer Schraube, kann insbesondere die Länge bzw. Ausdehnung der Nebenachse angepasst werden.

In einigen erfindungsgemäßen Ausführungsformen ist die Hauptachse des elliptischen Querschnitts, die in Umfangsrichtung der Rotorscheibe ausgerichtet ist, maximal 15% größer gegenüber der Nebenachse des elliptischen Querschnitts, die in Radialrichtung der Rotorscheibe ausgerichtet ist.

In einigen erfindungsgemäßen Ausführungsformen ist die Hauptachse des elliptischen Querschnitts, die in Umfangsrichtung der Rotorscheibe ausgerichtet ist, maximal 10% größer gegenüber der Nebenachse des elliptischen Querschnitts, die in Radialrichtung der Rotorscheibe ausgerichtet ist.

In einigen erfindungsgemäßen Ausführungsformen ist die Hauptachse des elliptischen Querschnitts, die in Umfangsrichtung der Rotorscheibe ausgerichtet ist, maximal 5% größer gegenüber der Nebenachse des elliptischen Querschnitts, die in Radialrichtung der Rotorscheibe ausgerichtet ist.

In einigen erfindungsgemäßen Ausführungsformen ist die Länge bzw. Ausdehnung der Nebenachse des elliptischen Querschnitts der Durchgangsbohrung maximal 10% größer gegenüber dem Durchmesser eines Schafts des Verbindungselements in der Durchgangsbohrung. Beispielsweise kann das Verbindungselement ein Bolzen sein. In einem ersten Fertigungsschritt kann die Durchgangsbohrung als kreisrunde Bohrung mit einer Spielpassung ausgeführt werden. Anschließend kann diese kreisrunde Bohrung zu einer elliptischen Durchgangsbohrung aufgeweitet werden, beispielsweise mit Hilfe einer Spiralfräsung. Diese Aufweitung kann eine maximale Aufweitung der Länge bzw. Ausdehnung der Nebenachse auf eine zusätzliche Länge von 10% gegenüber dem Durchmesser der zuvor ausgeführten kreisrunde Bohrung vorsehen. Rein exemplarisch könnte die kreisrunde Bohrung eine Durchmesser von 9 mm aufweisen. Dann kann die Länge bzw. Ausdehnung der Nebenachse auf maximal 9,9 mm begrenzt werden.

In einigen erfindungsgemäßen Ausführungsformen ist die Länge bzw. Ausdehnung der Nebenachse des elliptischen Querschnitts der Durchgangsbohrung maximal 5% größer gegenüber dem Durchmesser eines Schafts des Verbindungselements in der Durchgangsbohrung.

In einigen erfindungsgemäßen Ausführungsformen ist das Verbindungselement ein Bolzen mit einem Bolzenkopf und einem Sicherungselement.

In einigen erfindungsgemäßen Ausführungsformen weist der Schaft des Verbindungselements ein Gewinde auf. Das Sicherungselement kann eine Mutter sein.

In einigen erfindungsgemäßen Ausführungsformen ist die Durchgangsbohrung oberflächenbehandelt. Insbesondere nach einem Aufweiten mittels eines mechanischen Bearbeitungsprozesses einer zunächst kreisrunden Durchgangsbohrung, beispielsweise mittels eines spanabhebenden Verfahrens, insbesondere eines Fräsprozesses, kann die Oberfläche der Durchgangsbohrung mittels einer Oberflächenbehandlung verbessert werden. Eine Verbesserung der Oberfläche kann mittels eines niedrigeren Mittenrauwerts der Oberfläche quantifiziert werden.

Eine Oberflächenbehandlung kann beispielsweise ein Strahlen und/oder ein Festwalzen und/oder ein Glattwalzen umfassen. Eine Oberflächenbehandlung kann vorteilhaft die Lebensdauer des Bauteils erhöhen, insbesondere wenn das Bauteil hohen mechanischen Belastungen, beispielsweise hohen mechanischen Spannungsbelastungen und/oder hohen mechanischen Spannungsamplituden unterliegt.

In einigen erfindungsgemäßen Ausführungsformen weist die Oberfläche der Durchgangsbohrung einen Mittenrauwert von maximal 0,4 µm, insbesondere von maximal 0,2 µm, auf.

In einigen erfindungsgemäßen Ausführungsformen ist der Rotor ein Rotor einer Gasturbinenstufe, insbesondere einer Niederdruckturbine.

In einigen erfindungsgemäßen Ausführungsformen ist die Turbomaschine eine axiale Gasturbine, insbesondere ein Flugtriebwerk.

Manche oder alle erfindungsgemäßen Ausführungsformen können einen, mehrere oder alle der oben und/oder im Folgenden genannten Vorteile aufweisen.

Der erfindungsgemäße Rotor kann eine Schädigung aufgrund hoher mechanischer Spannungsniveaus und/oder hoher mechanischer Spannungsamplituden in einer Rotorstufe mittels einer Durchgangsbohrung für ein Sicherungselement vorteilhaft zumindest reduzieren. Der erfindungsgemäße Rotor kann die Materialbelastung in der Rotorstufe, insbesondere in der Rotorscheibe, die eine Durchgangsbohrung für ein Sicherungselement aufweist, aufgrund des nicht kreisförmigen, insbesondere elliptischen Querschnitts der Durchgangsbohrung reduzieren. Die Schädigung kann als Bauteilschädigung bezeichnet werden.

Der erfindungsgemäße Rotor kann die auftretenden mechanischen Spannungsamplituden in der Durchgangsbohrung mit einem nicht kreisförmigen, insbesondere elliptischen Querschnitt gegenüber einer Durchgangsbohrung mit einem kreisrunden Querschnitt vorteilhaft verringern. Rein exemplarisch kann die Spannungsamplitude an der Oberfläche der Durchgangsbohrung, beispielsweise bei einem Belastungsfall, wie er in einem Flugtriebwerk auftritt, von ca. 2000 MPa bei einem kreisrunden Querschnitt auf ca. 1800 MPa bei einem elliptischen Querschnitt reduziert werden.

Der erfindungsgemäße Rotor kann den sogenannten Rotor-Kennwert "LCF" (Low-Cycle-Fatigue) verbessern, beispielsweise von einem LCF von ca. 20000 c/s (cycles per second) bei einem Rotor mit einem kreisrunden Querschnitt der Durchgangsbohrung auf einen LCF von ca. 25000 c/s (cycles per second) bei einem Rotor mit einem elliptischen Querschnitt der Durchgangsbohrung.

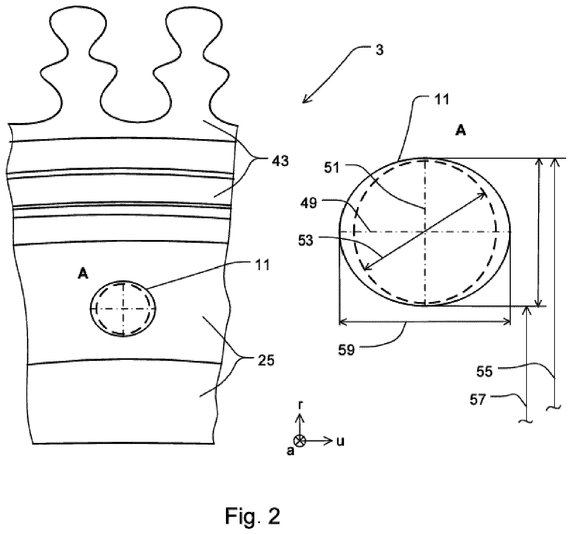

Mittels des erfindungsgemäßen Rotors kann vorteilhaft die mechanische Belastung der Durchgangsbohrung zum Verbinden der Rotorstufen derart angepasst werden, dass die Belastung im Bereich des radial inneren Durchmessers der Durchgangsbohrung, im Bereich des radial äußeren Durchmessers der Durchgangsbohrung als auch im Bereich der sogenannten Speiche, also im Bereich der umfangsseitigen Oberfläche der Durchgangsbohrung (siehe Fig. 2) in etwa gleich hoch ist. Wenn die Durchgangsbohrung eine derartige, annähernd gleiche Belastungssituation an den Oberflächen aufweist, kann die Durchgangsbohrung als eine, zumindest annähernd, optimal ausgelegte Durchgangsbohrung bezeichnet werden. Folglich ist mittels des erfindungsgemäßen Rotors eine, zumindest annähernd, optimal ausgelegte Durchgangsbohrung vorteilhaft möglich.

Eine Bauteilschädigung kann derart definiert werden, dass eine Durchgangsbohrung eine Rissbildung aufweist, die von der Oberfläche der Durchgangsbohrung ausgeht und sich in das Material des Bauteils hin fortsetzt. Beispielsweise kann eine Bauteilschädigung einen technischen Anriss mit einer Risstiefe von mindestens ca. 0,4 mm bis 0,8 mm aufweisen, wobei diese Werte rein exemplarisch sind. Derartige Risstiefen können in Ausführungsformen auftreten, in denen der Rotor Teil eines Flugtriebwerks ist, insbesondere Teil einer Niederdruckturbine in dem Flugtriebwerk. Beispielsweise können in vorgegebenen Wartungsintervallen die Flugtriebwerke hinsichtlich derartiger Rissbildungen untersucht werden. Die Wartungsintervalle können nach einer bestimmten Zyklenanzahl des Bauteils durchgeführt werden, die beispielsweise nach den erfolgten Flugbewegungen des Flugtriebwerks ermittelt werden. Die Flugbewegungen können anhand der erfolgten Starts und Landungen eines Flugzeugs mit dem Flugtriebwerk ermittelt werden.

Eine Bauteilschädigung kann als Merkmal bzw. als Indiz für die Lebensdauer eines Bauteils verwendet werden. Die exemplarisch angegebenen Risstiefen können somit die Lebensdauer des Bauteils zumindest beeinflussen. Der erfindungsgemäße Rotor kann somit die Lebensdauer des Rotors mithilfe des nicht kreisförmigen, insbesondere elliptischen Querschnitts der Durchgangsbohrung vorteilhaft erhöhen.

Ein weiterer Einflussfaktor auf die oben beschriebene Rissbildung ist die Bauteiltemperatur. Insbesondere in Niederdruckturbinen und/oder Hochdruckturbinen von Flugtriebwerken treten hohe Temperaturen auf, die die Rissbildung beeinflussen können. Daher kann der erfindungsgemäße Rotor insbesondere in Niederdruckturbinen und/oder Hochdruckturbinen von Flugtriebwerken vorteilhaft eine Bauteilschädigung zumindest verringern und/oder die Lebensdauer des Rotors erhöhen.

Mittels des erfindungsgemäßen Rotors kann vorteilhaft die Anzahl von Verbindungselementen zum Verbinden von Rotorstufen reduziert werden. Aufgrund einer verringerten Bauteilbelastung mittels eines nicht kreisförmigen, insbesondere elliptischen Querschnitts der Durchgangsbohrungen für Verbindungselemente kann eine verringerte Anzahl von Verbindungselementen pro Rotorstufe zu einem geringeren Gewicht des Rotors führen. Ein geringeres Gewicht kann zu Kosteneinsparungen beispielsweise aufgrund eines verringerten Treibstoffverbrauchs eines Flugtriebwerks führen.

Mittels des erfindungsgemäßen Rotors kann vorteilhaft ein zulässiger LCF-Wert erreicht werden, beispielsweise ein LCF-Wert von 25000 c/s für eine Niederdruckturbine in einem Flugtriebwerk, ohne dafür die Anzahl der Durchgangsbohrungen und Verbindungselemente pro Rotorscheibe zu erhöhen. Der LCF-Wert von 25000 c/s kann beispielsweise durch einen elliptischen Querschnitt der Durchgangsbohrungen erzielt werden.

Die vorliegende Erfindung wird im Folgenden anhand der beigefügten Zeichnungen, in welcher identische Bezugszeichen gleiche oder ähnliche Bauteile bezeichnen, exemplarisch erläutert. In den jeweils stark schematisch vereinfachten Figuren gilt:
- Fig. 1: zeigt einen erfindungsgemäßen Rotor mit drei Rotorstufen, die mittels eines Bolzens miteinander verbunden sind; und
- Fig. 2: zeigt einen Ausschnitt einer Rotorscheibe eines erfindungsgemäßen Rotors mit einer Durchgangsbohrung, die einen elliptischen Querschnitt aufweist.

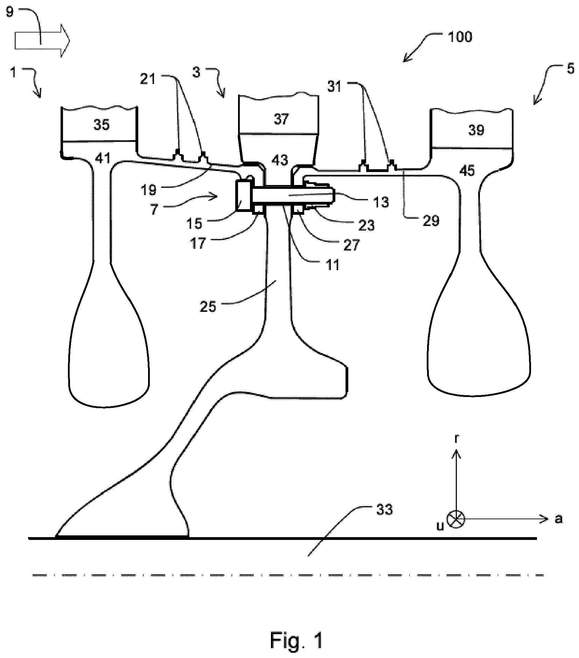

Fig. 1 zeigt einen erfindungsgemäßen Rotor 100 für eine axiale Turbomaschine mit drei Rotorstufen 1, 3, 5, die mittels eines Bolzens 7 miteinander verbunden sind.

Die in Fig. 1 mittlere Rotorstufe 3, die in Durchströmungsrichtung 9 der Turbomaschine betrachtet die zweite Rotorstufe 3 des Rotors 100 ist, weist eine Durchgangsbohrung 11 durch die Rotorscheibe 25 der zweiten Rotorstufe 3 auf, durch die der Bolzenschaft 13 des Bolzens 7 hindurchgeführt bzw. hindurchgesteckt wurde. Die Querschnittsform der Durchgangsbohrung 11 wird in Fig. 2 näher erläutert. Ein Flansch 17 der ersten Rotorstufe 1 ist am axial a stromab gelegenen Endbereich des Rotorarms 19 angeordnet. Der Rotorarm 19 weist weiterhin Dichtspitzen 21 zum Abdichten einer möglichen Leckageströmung zwischen dem Rotorarm 19 und einer Leitschaufel (in Fig. 1 nicht dargestellt) auf.

Der Bolzen 7 weist einen Bolzenkopf 15 auf, der am Flansch 17 der ersten Rotorstufe 1 anliegt. Der Bolzenkopf 15 liegt weiterhin rein exemplarisch am Umfang des Bolzenkopfs 15 an einem Absatz des Rotorarms 19 an. Dieses Anliegen kann als Verdrehsicherung beim Festziehen der Verbindung der drei Rotorstufen 1, 3, 5 wirken. Zum Festziehen bzw. Sichern der Verbindung der drei Rotorstufen 1, 3, 5 weist der Bolzenschaft 9 rein exemplarisch ein Gewinde am Bolzenschaftende (rechts in Fig. 1) auf, auf das ein Sicherungselement, hier exemplarisch eine Mutter 23 aufgeschraubt wird. Andere Sicherungsmöglichkeiten, z. B. mittels eines Splints, sind gleichfalls möglich.

Die dritte Rotorstufe 5 (in Fig. 1 rechts angeordnet) ist ebenfalls mittels eines Flanschs 27 und dem Bolzen 7 mit der zweiten Rotorstufe 3, und mittelbar mit der ersten Rotorstufe 1, verbunden. Im Gegensatz zum Flansch 17 der ersten Rotorstufe 1 ist der Flansch 27 der dritten Rotorstufe 5 am stromauf vorderen (in Durchströmungsrichtung 9 betrachtet) Ende des Rotorarms 29 angeordnet.

Die zweite Rotorstufe 3 ist mit einer Welle 33 der axialen Turbomaschine verbunden. Diese Verbindung ist hier aus Gründen der Übersichtlichkeit nicht näher ausgeführt. Die Verbindung kann beispielsweise eine Paßfeder-Nut-Verbindung sein. Mittels dieser Verbindung sind auch die erste 1 und dritte 5 Rotorstufe des erfindungsgemäßen Rotors 100 mit der Welle 33 verbunden.

Alle drei Rotorstufen 1, 3, 5 sind beschaufelt, weisen also Laufradschaufeln 35, 37, 39 auf, die nach radial außen, in Bezug auf die Rotorgrundkörper 41, 43, 45, gerichtet sind.

Wie in Fig. 1 dargestellt ist, können die Durchgangsbohrung 11 durch die Rotorscheibe 25 und die an der an Rotorscheibe 25 angeordneten Schaufeln 37 dieselbe Axialposition aufweisen und/oder kann die Durchgangsbohrung 11 im axialen Erstreckungsbereich der Schaufeln 37 angeordnet sein.

Fig. 2 zeigt einen Ausschnitt der zweiten Rotorscheibe 3 eines erfindungsgemäßen Rotors 100 mit einer Durchgangsbohrung 11, die einen elliptischen Querschnitt aufweist.

Die Rotorscheibe 3 ist in Bezug auf die Ansicht der Fig. 1 um 90 Grad gedreht, in die Zeichenebene hinein. Die Umfangsrichtung u weist in Fig. 2 nach rechts, die Axialrichtung a in die Zeichenebene hinein.

Der Rotorgrundkörper 43 ist radial r außen zum Verbinden mit einem Schaufelfuß der Schaufel 37 (siehe Fig. 1) rein exemplarisch in Schwalbenschwanzform ausgebildet. Ebenso könnte das gesamte Laufrad, also die Schaufeln 37 mit Schaufelfüßen, Rotorgrundkörper 43 und Rotorscheibe 25 in integraler Bauweise (einstückig) ausgebildet sein.

Die Durchgangsbohrung 11, die in Axialrichtung a durch die gesamte Rotorscheibe 25 hindurch verläuft, ist als Ausschnittvergrößerung A rechts in Fig. 2 vergrößert dargestellt. Erfindungsgemäß weist die Durchgangsbohrung 11 einen elliptischen Querschnitt auf. Die Hauptachse 49 des elliptischen Querschnitts ist in Umfangsrichtung u größer gegenüber der Nebenachse 51, die in Radialrichtung r der Rotorscheibe 25 ausgerichtet ist. Die Länge bzw. Ausdehnung der Hauptachse 49 kann als Speiche 59 (englisch: Spoke) bezeichnet werden. Die Speiche kann als "Rad." abgekürzt werden. Der in Bezug auf die Radialrichtung r äußere Durchmesser 55 bzw. Außendurchmesser kann als "OD" (englisch: outer diameter) abgekürzt werden, der innere Durchmesser 57 bzw. Innendurchmesser kann als "ID" (englisch: inner diameter) abgekürzt werden.

Zur Verdeutlichung ist ein runder Durchmesser 53 gestrichelt dargestellt, der eine Bolzenbohrung ohne dem erfindungsgemäßen elliptischen Querschnitt entsprechen würde. Diese Bolzenbohrung würde beispielsweise eine Spielpassung gegenüber dem Bolzenschaftdurchmesser aufweisen. Andere Passungen oder Bohrungsdurchmesser für eine Bolzenbohrung wären ebenfalls möglich. Der elliptische Querschnitt kann beispielsweise derart hergestellt werden, dass zunächst eine runde Durchgangsbohrung gefertigt wird und anschließend, beispielsweise mittels eines Spiralfräsverfahrens, eine elliptische Aufweitung erfolgt.

Der erfindungsgemäße elliptische Querschnitt 11 ermöglicht vorteilhaft eine verringerte Materialbelastung der Rotorscheibe 25 im Bereich der Durchgangsbohrung 11. Im betriebsbedingten Einsatz eines erfindungsgemäßen Rotors 100 in einer Turbomaschine, insbesondere in einem Flugtriebwerk, kann das (mechanische) Spannungsniveau als auch die Spannungsamplitude im Bereich der Durchgangsbohrung 11, verursacht durch den Bolzen 7, Größen annehmen, die zu einer Schädigung und damit zu einer verringerten Lebensdauer des Bauteils führen können.

In anderen nicht gezeigten erfindungsgemäßen Ausführungsformen kann der Querschnitt der Durchgangsbohrung eine andere nicht kreisförmige und nicht elliptische Form haben, deren insbesondere maximale Abmessung bzw. Erstreckung in Umfangsrichtung größer ist als in Radialrichtung, die ebenfalls eine Verbesserung gegenüber einer Durchgangsbohrung mit kreisförmigen Querschnitt ermöglicht.

### Bezugszeichenliste

- r: radial, Radialrichtung
- a: axial, Axialrichtung
- u: Umfangsrichtung
- 100: Rotor
- 1, 3, 5: Rotorstrufe
- 7: Verbindungselement, Bolzen
- 9: Durchströmungsrichtung der Turbine
- 11: Durchgangsbohrung
- 13: Schaft, Bolzenschaft
- 15: Bolzenkopf
- 17: Flansch der ersten Rotorstufe
- 19: Rotorarm der ersten Rotorstufe
- 21: Dichtspitzen des ersten Rotorarms
- 23: Sicherungselement, Mutter
- 25: Rotorscheibe der zweiten Rotorstufe
- 27: Flansch der dritten Rotorstufe
- 29: Rotorarm der dritten Rotorstufe
- 31: Dichtspitzen des ersten Rotorarms
- 33: Welle
- 35, 37, 39: Schaufel
- 41, 43, 45: Rotorgrundkörper
- 47: Schaufelfuß der zweiten Rotorstufe
- 49: Hauptachse des elliptischen Querschnitts
- 51: Nebenachse des elliptischen Querschnitts
- 53: Durchmesser einer Bolzenbohrung
- 55: Außendurchmesser, äußerer Durchmesser
- 57: Innendurchmesser, innerer Durchmesser
- 59: Speiche, Länge bzw. Ausdehnung der Hauptachse

## Patentansprüche

1. Rotor (100) für eine Turbomaschine, mit wenigstens zwei beschaufelten, lösbar miteinander verbundenen Rotorstufen (1, 3, 5), wobei ein Flansch (17) einer ersten Rotorstufe (1) mit einer beschaufelten Rotorscheibe (25) einer zweiten, benachbarten Rotorstufe (3) mittels wenigstens eines Verbindungselements (7) verbunden ist, wobei die Rotorscheibe (25) eine Durchgangsbohrung (11) zum Verbinden der beiden Rotorstufen (1, 3) mittels des Verbindungselements (7) aufweist, und wobei die Durchgangsbohrung (11) einen Querschnitt aufweist, der in Umfangsrichtung (u) der Rotorscheibe (25) größer als in Radialrichtung (r) der Rotorscheibe (25) ist, wobei die Querschnittsabmessung der Durchgangsbohrung (11) in Umfangsrichtung (u) der Rotorscheibe (25) maximal 20% größer als die Querschnittsabmessung der Durchgangsbohrung (11) in Radialrichtung (r) der Rotorscheibe (25) ist.

2. Rotor (100) nach Anspruch 1, wobei die Durchgangsbohrung (11) einen elliptischen Querschnitt aufweist, wobei der elliptische Querschnitt **dadurch gekennzeichnet ist, dass** die Hauptachse (49) des elliptischen Querschnitts in Umfangsrichtung (u) der Rotorscheibe (25) größer gegenüber der Nebenachse (51) in Radialrichtung (r) der Rotorscheibe (25) ist.

3. Rotor (100) nach Anspruch 1, wobei die Durchgangsbohrung die Form eines Langlochs aufweist.

4. Rotor (100) nach einem der vorangegangenen Ansprüche, wobei die Durchgangsbohrung (11) am radial äußeren Endbereich der Rotorscheibe (25) am Übergang zum Rotorgrundkörper (43) angeordnet ist.

5. Rotor (100) nach einem der vorangegangenen Ansprüche, wobei der Flansch (17) der ersten Rotorstufe (1) am, in Bezug auf die Durchströmungsrichtung (9) der Turbomaschine, axial stromab angeordneten Ende eines Rotorarms (19) der ersten Rotorstufe (1) angeordnet ist.

6. Rotor (100) nach einem der vorangegangenen Ansprüche, wobei ein Flansch (27) einer dritten Rotorstufe (5) am, in Bezug auf die Durchströmungsrichtung (9) der Turbomaschine, axial stromauf angeordneten Ende eines Rotorarms (29) der dritten Rotorstufe (5) angeordnet ist und das Verbindungselement (7) mit dem Flansch (27) der dritten Rotorstufe (5) verbunden ist.

7. Rotor (100) nach einem der vorangegangenen Ansprüche, wobei die erste Rotorstufe (1) eine stromauf erste Rotorstufe (1) des Rotors (100) ist.

8. Rotor (100) nach einem der vorangegangenen Ansprüche, wobei die Querschnittsabmessung der Durchgangsbohrung (11) in Umfangsrichtung (u) der Rotorscheibe (25) maximal 15%, insbesondere maximal 10%, weiter insbesondere maximal 5% größer als die Querschnittsabmessung der Durchgangsbohrung (11) in Radialrichtung (r) der Rotorscheibe (25) ist.

9. Rotor (100) nach einem der Ansprüche 2 bis 8, wobei die Hauptachse (49) des elliptischen Querschnitts in Umfangsrichtung (u) der Rotorscheibe (25) maximal 20%, insbesondere maximal 15%, weiter insbesondere maximal 10%, weiter insbesondere maximal 5% größer gegenüber der Nebenachse (51) in Radialrichtung (r) der Rotorscheibe (25) ist.

10. Rotor (100) nach einem der vorangegangenen Ansprüche, wobei die Nebenachse (51) des elliptischen Querschnitts der Durchgangsbohrung (11) maximal 10%, insbesondere maximal 5% größer als der Durchmesser eines Schafts (13) des Verbindungselements (7) in der Durchgangsbohrung (11) ist.

11. Rotor (100) nach dem vorangegangenen Anspruch, wobei das Verbindungselement (7) ein Bolzen mit einem Bolzenkopf (15) und einem Sicherungselement (23) ist.

12. Rotor (100) nach dem vorangegangenen Anspruch, wobei ein Schaft (13) des Verbindungselements (7) ein Gewinde aufweist und das Sicherungselement (23) eine Mutter (23) ist.

13. Rotor (100) nach einem der vorangegangenen Ansprüche, wobei die Oberfläche der Durchgangsbohrung (11) einen Mittenrauwert von maximal 0,4 µm, insbesondere von maximal 0,2 µm, aufweist.

14. Rotor (100) nach einem der vorangegangenen Ansprüche, wobei der Rotor (100) ein Rotor (100) einer axialen Gasturbinenstufe, insbesondere einer Niederdruckturbine, ist.

15. Rotor (100) nach einem der vorangegangenen Ansprüche, wobei die Turbomaschine eine axiale Gasturbine, insbesondere ein Flugtriebwerk, ist.

## Claims

1. Rotor (100) for a turbomachine, comprising at least two bladed, detachably interconnected rotor stages (1, 3, 5), wherein a flange (17) of a first rotor stage (1) is connected to a bladed rotor disc (25) of a second, adjacent rotor stage (3) by means of at least one connecting element (7), wherein the rotor disc (25) has a through hole (11) for connecting the two rotor stages (1, 3) by means of the connecting element (7), and wherein the through hole (11) has a cross section which is larger in the circumferential direction (u) of the rotor disc (25) than in the radial direction (r) of the rotor disc (25), wherein the cross-sectional dimension of the through hole (11) is at most 20% larger in the circumferential direction (u) of the rotor disc (25) than the cross-sectional dimension of the through hole (11) in the radial direction (r) of the rotor disc (25).

2. Rotor (100) according to claim 1, the through hole (11) having an elliptical cross section, the elliptical cross section being **characterized in that** the major axis (49) of the elliptical cross section is larger in the circumferential direction (u) of the rotor disc (25) compared with the minor axis (51) in the radial direction (r) of the rotor disc (25).

3. Rotor (100) according to claim 1, wherein the through hole is in the form of a slot.

4. Rotor (100) according to any of the preceding claims, wherein the through hole (11) is arranged at the radially outer end region of the rotor disc (25) at the transition to the main rotor body (43).

5. Rotor (100) according to any of the preceding claims, wherein the flange (17) of the first rotor stage (1) is arranged, with respect to the flow direction (9) of the turbomachine, on the axially downstream end of a rotor arm (19) of the first rotor stage (1).

6. Rotor (100) according to any of the preceding claims, wherein a flange (27) of a third rotor stage (5) is arranged, with respect to the flow direction (9) of the turbomachine, on the axially upstream end of a rotor arm (29) of the third rotor stage (5) and the connecting element (7) is connected to the flange (27) of the third rotor stage (5).

7. Rotor (100) according to any of the preceding claims, wherein the first rotor stage (1) is an upstream first rotor stage (1) of the rotor (100).

8. Rotor (100) according to any of the preceding claims, wherein the cross-sectional dimension of the through hole (11) is at most 15%, in particular at most 10%, more particularly at most 5% larger in the circumferential direction (u) of the rotor disc (25) than the cross-sectional dimension of the through hole (11) in the radial direction (r) of the rotor disc (25).

9. Rotor (100) according to any of claims 2 to 8, wherein the major axis (49) of the elliptical cross section is at most 20%, in particular at most 15%, more particularly at most 10%, more particularly at most 5% larger in the circumferential direction (u) of the rotor disc (25) compared with the minor axis (51) in the radial direction (r) of the rotor disk (25).

10. Rotor (100) according to any of the preceding claims, wherein the minor axis (51) of the elliptical cross section of the through hole (11) is at most 10%, in particular at most 5% larger than the diameter of a shaft (13) of the connecting element (7) in the through hole (11).

11. Rotor (100) according to the preceding claim, wherein the connecting element (7) is a bolt having a bolt head (15) and a securing element (23).

12. Rotor (100) according to the preceding claim, wherein a shaft (13) of the connecting element (7) has a thread and the securing element (23) is a nut (23).

13. Rotor (100) according to any of the preceding claims, wherein the surface of the through hole (11) has an average roughness of at most 0.4 µm, in particular of at most 0.2 µm.

14. Rotor (100) according to any of the preceding claims, wherein the rotor (100) is a rotor (100) of an axial gas turbine stage, in particular a low-pressure turbine.

15. Rotor (100) according to any of the preceding claims, wherein the turbomachine is an axial gas turbine, in particular an aircraft engine.

## Revendications

1. Rotor (100) pour une turbomachine, comprenant au moins deux étages de rotor (1, 3, 5) à aubes reliés de manière amovible, dans lequel une bride (17) d'un premier étage de rotor (1) est reliée à un disque de rotor (25) à aubes d'un deuxième étage de rotor (3) adjacent au moyen d'au moins un élément de liaison (7), dans lequel le disque de rotor (25) comporte un trou débouchant (11) pour relier les deux étages de rotor (1, 3) au moyen de l'élément de liaison (7), et dans lequel le trou débouchant (11) comporte une section transversale qui est plus grande dans la direction circonférentielle (u) du disque de rotor (25) que dans la direction radiale (r) du disque de rotor (25), dans lequel la dimension de section transversale du trou débouchant (11) dans la direction circonférentielle (u) du disque de rotor (25) est au maximum 20 % supérieure à la dimension de section transversale du trou débouchant (11) dans la direction radiale (r) du disque de rotor (25).

2. Rotor (100) selon la revendication 1, dans lequel le trou débouchant (11) comporte une section transversale elliptique, dans lequel la section transversale elliptique est **caractérisée en ce que** l'axe principal (49) de la section transversale elliptique dans la direction circonférentielle (u) du disque de rotor (25) est plus grand que l'axe secondaire (51) dans la direction radiale (r) du disque de rotor (25).

3. Rotor (100) selon la revendication 1, dans lequel le trou débouchant présente la forme d'un trou allongé.

4. Rotor (100) selon l'une des revendications précédentes, dans lequel le trou débouchant (11) est disposé dans la zone d'extrémité radialement extérieure du disque de rotor (25) au niveau de la transition vers le corps de base de rotor (43).

5. Rotor (100) selon l'une des revendications précédentes, dans lequel la bride (17) du premier étage de rotor (1) est disposée à l'extrémité d'un bras de rotor (19) du premier étage de rotor (1), laquelle extrémité est disposée axialement en aval par rapport à la direction d'écoulement (9) de la turbomachine.

6. Rotor (100) selon l'une des revendications précédentes, dans lequel une bride (27) d'un troisième étage de rotor (5) est disposée à l'extrémité d'un bras de rotor (29) du troisième étage de rotor (5), laquelle extrémité est disposée axialement en amont par rapport à la direction
d'écoulement (9) de la turbomachine, et l'élément de liaison (7) est relié à la bride (27) du troisième étage de rotor (5).

7. Rotor (100) selon l'une des revendications précédentes, dans lequel le premier étage de rotor (1) est un premier étage de rotor (1) en amont du rotor (100).

8. Rotor (100) selon l'une des revendications précédentes, dans lequel la dimension de la section transversale du trou débouchant (11) dans la direction circonférentielle (u) du disque de rotor (25) est au maximum de 15 %, en particulier au maximum de 10 %, plus particulièrement au maximum de 5 % supérieure à la dimension de la section transversale du trou débouchant (11) dans la direction radiale (r) du disque de rotor (25).

9. Rotor (100) selon l'une des revendications 2 à 8, dans lequel l'axe principal (49) de la section elliptique dans la direction circonférentielle (u) du disque de rotor (25) est au maximum de 20 %, en particulier au maximum de 15 %, plus particulièrement au maximum de 10 %, plus particulièrement au maximum de 5 % supérieur à l'axe secondaire (51) dans la direction radiale (r) du disque de rotor (25).

10. Rotor (100) selon l'une des revendications précédentes, dans lequel l'axe secondaire (51) de la section elliptique du trou débouchant (11) est au maximum 10 %, en particulier au maximum 5 % supérieur au diamètre d'une tige (13) de l'élément de liaison (7) dans le trou débouchant (11).

11. Rotor (100) selon la revendication précédente, dans lequel l'élément de liaison (7) est un boulon comportant une tête de boulon (15) et un élément de fixation (23).

12. Rotor (100) selon la revendication précédente, dans lequel une tige (13) de l'élément de liaison (7) comporte un filetage et l'élément de fixation (23) est un écrou (23).

13. Rotor (100) selon l'une des revendications précédentes, dans lequel la surface du trou débouchant (11) présente une valeur de rugosité moyenne de 0,4 µm maximum, en particulier de 0,2 µm maximum.

14. Rotor (100) selon l'une des revendications précédentes, dans lequel le rotor (100) est un rotor (100) d'un étage de turbine axiale, en particulier d'une turbine basse pression.

15. Rotor (100) selon l'une des revendications précédentes, dans lequel la turbomachine est une turbine à gaz axiale, en particulier un moteur d'aéronef.
